# EUROPÄISCHE PATENTANMELDUNG

(11) **EP 0 964 348 A2**
(43) Veröffentlichungstag der Anmeldung: **15.12.1999**
(21) Anmeldenummer: 99110524.8
(22) Anmeldetag: 01.06.1999
(51) Int. Cl.: G06F 17/60

(54) **Kontoauszug**

(30) Priorität: 12.06.1998 DE 19826112
(71) Anmelder: Schulze, Frank, 09111 Chemnitz (DE)
(72) Erfinder: Schulze, Frank, 09111 Chemnitz (DE)
(74) Vertreter: Schindler, Gunter

(57) **Zusammenfassung**

Aufgabe war, in Zeiten des verstärkten Einsatzes von Selbsbedienungsterminals und on-line-banking, einen Kontoauszug zu schaffen, der Zusatzinformationen enthält, die den jeweiligen Kunden tatsächlich interessieren könnten, um damit, ohne direkten Kontakt mit Bankangestellten, spezielle kundenspezifische Informationen, wie bisher nur durch den direkten Kundenkontakt möglich, an den Bankkunden weiterzugeben bzw. um dadurch sein Interesse an einer Beratung zu wecken.
Dieses Problem wird dadurch gelöst, daß für jeden Kunden spezifische auf seine Interessen, Bedürfnisse und finanziellen Verhältnisse abgestimmte Zusatzinformationen ohne Wiederholungen auf dem Kontoauszug enthalten sind, die mindestens die Informationen des bisherigen Direktkundenkontaktes rechentechnisch erfaßt haben, durch
- Zuordnung und Speicherung kundenspezifischer Suchkriterien zu den bisher notwendigen Identifikationskriterien und Bildung nunmehr aktualisierbarer kundenspezifischer Informationskriterien,
- bekannte rechentechnische Verknüpfung aller dieser kundenspezifischen Informationskriterien als Suchkriterien mit zur Verfügung stehenden bzw. anzubietenden Angeboten und Ausgabe der übereinstimmenden Treffer zwischen Suchkriterien und Angeboten ohne Wiederholung auf dem Kontoauszug und
- Erweiterung der vorhandenen Startroutine um diese Verknüpfung der Suchkriterien mit den Angeboten vor Erstellung des Kontoauszuges.
Die Neuerung bezieht sich auf einen Kontoauszug, wie er üblicherweise an Kontoauszugsdruckern erstellt wird.

## Beschreibung

Die Neuerung bezieht sich auf einen Kontoauszug, wie er üblicherweise an Kontoauszugsdruckern erstellt oder mittels Datentransfer übermittelt wird. Die Neuerung ist darüber hinaus auch für andere Belege einsetzbar, die mittels einer Identifikation des Kunden, wie z.B. einer Kundenkarte eines Unternehmens, erstellt werden.

Üblicherweise werden Kontoauszüge schon als Vordruck mit zusätzlichen Daten der ausstellenden Bank versehen. Dies sind insbesondere Angaben, wie z.B. Name der Bank und Aufteilungsmerkmale und Spaltennamen des Kontoauszuges. Darüber hinaus werden bei der Erstellung des Kontoauszuges über die eigentlichen Kontobewegungen hinaus weitere auf den speziellen Kontoauszug abgestimmte und zur Identifikation des Kontoauszuges bestimmte Daten gedruckt, wie z.B. Kontonummer, Datum, Name des Kontoinhabers, laufende Nummer des Kontoauszuges, Blattnummer u.a. Es ist auch üblich weitere nicht zur Identifikation des Kontoauszuges dienende Zusatzangaben allgemeiner Natur auf alle Kontoauszüge einer ausstellenden Bank aufzubringen, wie z.B. jährlich wiederkehrende Festtagsgrüße zu bestimmten Festtagen wie Ostern u.a., Hinweise zur Einkommenssteuerpflicht von Kapitalerträgen oder Hinweise bzw. Werbung für bestimmte eigene Bankprodukte mit und ohne Anrede des jeweiligen Bankkunden. Diese Zusatzangaben sind immer für alle Bankkunden gleich und werden höchstens über das Datum des Kontoauszuges geändert. Es liegt damit also nur eine starre Zusatzinformation für die Gesamtheit aller Bankkunden vor, die nicht auf den Einzelkunden speziell zugeschnitten ist und nicht den Einzelkunden speziell anspricht. Diese starre Zusatzinformation hat damit lediglich die geringe Aktualität der anderen üblichen Werbemittel, wie z.B. Prospekte, Plakate und Dekorationen, und gibt nur allgemein gehaltene und für alle Nutzer zutreffende Informationen. Eine über diese geringe Aktualität hinausgehende und auf den speziellen Kunden zugeschnittene und ihn ansprechende Information wird damit nicht möglich. Zur Verbesserung dieser Situation wurden schon eine Vielzahl von Vorschlägen gemacht.
So wird in DE 295 03 657 U1 ein Modul zur Nutzungserweiterung von Bildschirmgeräten vorgeschlagen, mit dessen Hilfe allgemeine Aussagen und Anzeigen eines Geldausgabeautomaten oder Kontoauszugsdruckers stark verkürzt werden und die weitere Wartezeit durch die Einblendung 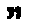 tagesaktueller Spruchweisheiten" überbrückt wird. Auch damit werden wiederum nur die allgemeinen Informationen um weitere auf alle Bankkunden zugeschnittene allgemeine Informationen erweitert. Eine stets topaktuelle und auf den speziellen Kunden zugeschnittene und nur ihn interessierende Information wird damit aber nicht ermöglicht.
Mit DE 295 03 726 U1 wird eine Vorrichtung zum Drucken von Kontoauszügen vorgeschlagen, mit der beim jeweiligen Beginn der Benutzung des Kontoauszugsdruckers durch den Kunden eine Startroutine zur Wiedergabe eines visuellen oder audiovisuellen Informationsblockes in Gang gesetzt wird. Auch hierdurch können nur weitere allgemeine Informationen, die für alle Kunden zutreffend sein sollen, aufgerufen werden. Auch hierdurch ist eine auf den speziellen Kunden zugeschnittene Information nicht erreichbar.

Nachteilig am Stand der Technik bleibt trotz der vorgeschlagenen Verbesserungen, daß dem Kunden lediglich für alle Kunden bestimmte Informationen mit starren Informationsgehalten an einem Display angezeigt oder auf einem Kontoauszug ausgedruckt werden, daß diese Informationen nur zeitabhängig geändert werden und daß damit keine für jeden einzelnen Kunden speziell erstellte, und damit über ein allgemeines Interesse hinaus interessante,3 Informationen enthalten sind.

Der im Patentanspruch 1 angegebenen Erfindung liegt in Zeiten des verstärkten Einsatzes von Selbsbedienungsterminals und on-line-banking das Problem zugrunde, einen Kontoauszug zu schaffen, der Zusatzinformationen enthält, die den jeweiligen Kunden tatsächlich interessieren könnten, um damit, ohne direkten Kontakt mit Bankangestellten, spezielle kundenspezifische Informationen, wie bisher nur durch den direkten Kundenkontakt möglich, an den Bankkunden weiterzugeben bzw. um dadurch sein Interesse an einer Beratung zu wecken.

Dieses Problem wird dadurch gelöst, daß für jeden Kunden spezifische auf seine Interessen, Bedürfnisse und finanziellen Verhältnisse abgestimmte Zusatzinformationen ohne Wiederholungen auf dem Kontoauszug enthalten sind, die mindestens die Informationen des bisherigen Direktkundenkontaktes rechentechnisch erfaßt haben, durch
- Zuordnung und Speicherung kundenspezifischer Suchkriterien zu den bishe notwendigen Identifikationskriterien und Bildung nunmehr aktualisierbarer kundenspezifischer Informationskriterien,
- bekannte rechentechnische Verknüpfung aller dieser kundenspezifischen Infomationskriterien als Suchkriterien mit zur Verfügung stehenden bzw. anzubietenden Angeboten und Ausgabe der übereinstimmenden Treffer zwischen Suchkriterien und Angeboten ohne Wiederholung auf dem Kontoauszug und
- Erweiterung der vorhandenen Startroutine um den Aufruf der Suchkriterien aus dem Speicher und um diese Verknüpfung der Suchkriterien mit den Angeboten vor Erstellung des Kontoauszuges.

Die mit der Erfindung erzielten Vorteile bestehen insbesondere darin, daß die spezifischen auf jeden Kunden abgestimmten Zusatzinformationen ernsthaft wahrgenommen werden und mit hoher Wahrscheinlichkeit vom Kunden darauf geprüft werden, ob daraus Reaktionen des Kunden erforderlich und sinnvoll sind.

Eine vorteilhafte Ausgestaltung der Erfindung ist im Patentanspruch 2 angegeben. Diese Weiterbildung ermöglicht es, daß Dritte oder die Bank gemeinsam mit Dritten für jeden Kunden spezifische Zusatzinformationen auf dem Kontoauszug bringt.

Dabei bestehen die besonderen Vorteile darin, daß die Bankkosten über Werbeeinnahmen ausgeglichen werden können.

Eine weitere vorteilhafte Ausgestaltung ist im Patentanspruch 3 angegeben. Diese Weiterbildung ermöglicht es, alle Kundendaten der Bank daraufhin abzufragen, ob die Zusatzinformation tatsächlich für den Kunden interessant sein könnte und ob diese Zusatzinformation dem Kunden schon einmal mitgeteilt wurde. Auch ist es damit möglich Ergänzungen zu einer 1. Zusatzinformation als 2. Schrift dem Kunden anzubieten.

Dabei bestehen die besonderen Vorteile darin, daß alle bankinternen Daten des Kunden dieses Kontos und seiner weiteren mit ihm verbundenen Konten oder der Konten seiner Familienangehörigen zur Prüfung der Sinnfälligkeit der Zusatzinformation herangezogen werden können.

Eine weitere vorteilhafte Ausgestaltung ist im Patentanspruch 4 angegeben. Diese Weiterbildung ermöglicht es, über bankinterne Daten der Anbieter von Zusatzinformationen vor Einspielung ihrer jeweiligen gewünschten Zusatzinformationen in den Kontoauszug anderer Bankkunden generell diesen Dritten auf seine Seriosität oder die Seriosität der von ihm angebotenen Waren oder Dienstleistungen zu prüfen.

Dabei bestehen die besonderen Vorteile darin, daß die Bank zur Vermeidung der Beschädigung des eigenen Rufes und zur Abwendung von Schaden von ihren Bankkunden die Weitergabe unseriöser Angebote von sogenannten 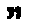 schwarzen Schafen" unterbinden kann. Dazu kann die Bank gegenüber den Möglichkeiten eines einzelnen Bankkunden wesentlich erweiterte Möglichkeiten der Kontrolle ausnutzen und somit indirekt diese Möglichkeiten an ihre eigenen Kunden weitergeben.

Eine weitere vorteilhafte Ausgestaltung ist im Patentanspruch 5 angegeben. Diese Weiterbildung ermöglicht es, daß die Einspielung von Zusatzinformationen auf Kontoauszüge anderer Bankkunden den Bankkunden als zusätzliches Marketinginstrument eines Betriebskontos für die Darbietung der Waren und Dienstleistungen des jeweiligen Inhabers des Betriebskontos zur Verfügung gestellt wird.

Dabei bestehen die besonderen Vorteile darin, daß der Vertrauensvorschuß eines Bankkunden gegenüber seiner Bank an die von der Bank aus der Gemeinschaft ihrer Kunden angebotenen Kunden oder der Waren und Dienstleistungen übertragen wird, der anbietende Bankkunde kompetente Ansprechpartner für seine Informationen findet und der angesprochene Bankkunde auf die Seriosität des Angebotes vertrauen kann.

Ein bevorzugtes Ausführungsbeispiel der Erfindung wird im folgenden näher beschrieben.

Vor Erstellen eines Kontoauszuges identifiziert sich bereits jetzt jeder Bankkunde. Schon bisher werden diese Daten zur Erstellung des Kontoauszuges abgeglichen und festgestellt, bis zu welcher Buchung der Kontoauszug schon übermittelt wurde, um Wiederholungen zu vermeiden oder den Zweitkontoauszug als Wiederholung zu kennzeichnen. Da unterschiedliche Kontobedingungen für verschiedene Kontoarten bereits jetzt bei vielen Banken existieren, ist über die Kontonummer immer auch die Kontoart festgelegt.
Nunmehr ordnet die Bank, insbesondere als Ersatz des wegfallenden Direktkundenkontaktes bei Nutzung von Selbstbedienungsterminals oder on-line-banking, ihren Kunden selbst weitere Suchkriterien und Verknüpfungen für einzuspielende Zusatzinformationen zu. Ebenso werden die zur Verfügung stehenden Zusatzinformationen nach diesen Suchkriterien bewertet und die Verknüpfungen als Suchregime eingeordnet. Diese können vielfältig und je nach Aufwand fein abgestuft sein. Das Ziel ist dabei aber immer, daß Dopplungen oder für den Kunden sinnlose und damit uninteressante Angaben nicht erscheinen, um kein Desinteresse an diesen Zusatzinformationen aufkommen zu lassen und daß diese Zusatzinformationen immer auf dem richtigen Kontoauszug erscheinen. Dazu sind die vorhandenen softwareseitigen Startroutinen um die Abstimmung dieser Suchkriterien und die Kontrolle durch die entsprechenden Verknüpfungen entsprechend zu ergänzen.
Dabei werden folgende Operationen über die bisherigen starren Identifikationsoperationen hinaus durchgeführt:
⇒ Zuordnung und Speicherung weiterer ständig aktualisierbarer kundenspezifischer Suchkriterien zu jeder Kontonummer
⇒ Bildung von variablen kundenspezifischen Identifikationskriterien daraus
⇒ Bildung von Angeboten für die Kunden
⇒ bekannte rechentechnische Verknüpfung und Trefferprüfung zwischen variablen kundenspezifischen Identifikationskriterien als Suchkriterien und Angeboten als Angebotskriterien
⇒ Erweiterung der vorhandenen Wiederholungsprüfung der Buchungsvorgänge um die Wiederholungsprüfung der Trefferausgabe, zumindest auf konkrete Art und Darstellung der Treffer
⇒ Aufnahme dieser obigen rechentechnischen Verknüpfung und der Speicherabfrage der Suchkriterien in die vorhandene Startroutine zur Identifikation des Kunden und
⇒ Ausgabe des Kontoauszuges mit den Kontobewegungen/Buchungsvorgängen und den neuen Treffern oder bisherigen Treffern in variierter und aktualisierter Form.

Diese Vorgänge sollen an einigen Beispielen erläutert werden:

Ein Kunde (x) jung, weiblich, teilt für sein Privatkonto die Änderung des Familiennamens mit. Aus dieser Information erstellt bzw. aktualisiert die Bank, eventuell auch durch weiterführende Abfrage, als mittelfristige Ziele folgende kundenspezifische Suchkriterien
1. Verknüpfung mit dem Konto des Ehepartners möglich, wenn bei gleicher Bank
2. Eigener Wohnraumbedarf, evtl. gemessen am Einkommen Immobilieninteresse
3. Wohnungsaustattungsbedarf
4. Neuer oder zu ergänzender Versicherungsbedarf
5. Zu o.g. auch Geldanlage-, Spar- und/oder Finanzierungsmöglichkeiten
Danach ordnet die Bank diese neuen Suchkriterien den bisherigen allgemeinen Identifikationskriterien zu und bildet nunmehr kundenspezifische Identifikationskriterien, verknüpft diese rechentechnisch mit vorhandenen Angeboten der Bank oder Dritter unter Prüfung auf übereinstimmende Treffer und fügt diese Verknüpfung als ständige Startroutine der bisherigen Startroutine hinzu. Auch die Verknüpfung mit dem Konto des Ehepartners ist unbedingt sinnvoll, damit keine zur Ermüdung bei der Informationsaufnahme führenden Doppelungen der Informationen auf beiden Konten auftreten.
Je nach Angebote werden der Kundin auf ihrem Kontoauszug in Zukunft beispielsweise Hinweise auf vermögenswirksame Leistungen als Möglichkeit der Kapitalbildung für die spätere Realisierung von Immobilienwünschen, Vermietungsoder Eigentumswohnungsangebote der Bank oder von Dritten, Finanzierungs- oder Leasingangebote für PKW, Versicherungsangebote, Informationen zu die Kundin betreffenden gesetzlichen Änderungen oder Informationstreffen der Bank für junge Eheleute angeboten.

Ein Kunde (y) eröffnet ein Geschäftskonto, evtl. auch zusätzlich zu bestehendem Privatkonto. Aus dieser Information erstellt bzw. aktualisiert die Bank, eventuell auch durch weiterführende Abfrage, als mittelfristige Ziele folgende kundenspezifische Suchkriterien:
1. Verknüpfung mit dem eigenen Privatkonto oder Konten des Ehepartners möglich, wenn bei gleicher Bank
2. Beratungsbedarf, Investitionsbedarf KFZ, Büro, Anlagen und Maschinen
3. Existenzgründungsdarlehen, Finanzierungshilfen
4. Neuer oder zu ergänzender Versicherungsbedarf
5. Zu o.g. auch Geldanlage- und/oder Finanzierungsmöglichkeiten
Danach ordnet die Bank diese neuen Suchkriterien den bisherigen allgemeinen Identifikationskriterien zu und bildet nunmehr kundenspezifische Identifikationskriterien, verknüpft diese rechentechnisch mit vorhandenen Angeboten der Bank oder Dritter unter Prüfung auf übereinstimmende Treffer und fügt diese Verknüpfung als ständige Startroutine der bisherigen Startroutine hinzu. Auch die Verknüpfung mit dem Privatkonto oder dem Konto des Ehepartners ist unbedingt sinnvoll, damit keine zur Ermüdung bei der Informationsaufnahme führenden Doppelungen der Informationen auf den Konten auftreten.
Je nach Angebote werden dem Kunden auf seinem Kontoauszug in Zukunft beispielsweise Hinweise auf Beratungen der Bank oder Dritter zur Existenzgründung (nur für eine Startphase von festzulegenden Monaten - danach aber nicht mehr), auf günstige Anschaffungssmöglichkeiten für KFZ, Büro, Anlagen und Maschinen (je nach seiner Betriebsspezifik, z.B. auch zu späterem Zeitpunkt noch Hinweis auf Neuanschaffung/Aktualisierung Bürotechnik oder Betriebsfahrzeuge), Finanzierungsangebote oder spezielle Angebote, z.B. zu dem bestehenden Kontokorrentkredit, Treffen von Unternehmern z.B. zu einer Visitenkartenparty, Möglichkeiten der Ertragsanlage (sinnvollerweise nur bei Überschüssen und erst nach Ende der Startphase von beispielsweise 1 Jahr) für betriebliche Erweiterungen und/oder spätere persönliche Wünsche, neue oder verbesserte Versicherungsangebote, Informationen zu den Kunden, seinen Betrieb, seine Mitarbeiter oder seine Altersvorsorge betreffenden gesetzlichen Änderungen, Informationstreffen der Bank oder Dritter für Unternehmer der Region oder Veranstaltungen der Bank oder Dritter mit potentiellen Investoren angeboten.
Die Weitergabe von zusätzlichen Informationen auf einem Betriebskonto kann aber auch völlig sinnlos werden, wenn einem Kunde, der neben seinem für Mitarbeiter der betrieblichen Buchhaltung zugänglichen Betriebskonto ein nur für den Kontoinhaber und weitere Familienangehörige zugängliches Privatkonto und ein nur für den konkreten Darlehensnehmer zugängliches Darlehenskonto für den privaten Hausbau bei gleicher Bank oder einer anderen Bank besitzt, auf seinem Betriebskonto und nicht auf seinem Privatkonto oder Darlehenskonto eine Zusatzinformation über beste Zinskonditionen bei Neukrediten für den privaten Hausbau mitgeteilt wird, da dadurch Informationen aus der Privatsphäre im Betrieb bekannt werden könnten. Bei Betriebskonten sollte deshalb als Suchkriterium auch immer die personellen Zugangsmöglichkeiten auf diese Konten herangezogen werden, um Fehlinformationen und Irritationen auszuschließen.
Darüber hinaus ist die genannte Information zu Hausbaudarlehen nur sinnvoll, wenn dem Kontoinhaber, der schon Darlehensnehmer ist, gleichzeitig dazu eine effiziente Umschuldung der schon bestehenden Darlehen für diesen Zweck angeboten werden kann.

Dagegen kann es sehr sinnvoll sein, wenn die Bank einem jung verheiratetem Ehepaar auf dessen gemeinsames Konto Zusatzinformationen zu Immobilienangeboten macht. Durch eine Namensänderung bei der Eheschließung hat die Bank ein erstes Suchkriterium. Damit kann durch Verknüpfung mit der unveränderten Adresse des vorher schon zusammenlebenden Ehepaares festgestellt werden, daß noch keine neue eheliche Wohnung o.ä. bezogen wurde. Über eine weitere Verknüpfung mit dem Alter der beiden Kontainhaber kann prognostiziert werden, daß dieses Ehepaar sich ein Kind wünscht und daß damit eventuell der derzeit vorhandene Wohnraum nicht mehr ausreichend sein könnte oder Interesse am Immobilienerwerb bestehen könnte (siehe auch Beispiel Kunde x).

Selbstverständlich müssen auch kundenspezifische Suchkriterien aus den Kontobewegungen und dem Kontostand abgeleitet werden. So entrichtet beispielsweise ein Kunde (z) durch Bankeinzug oder Überweisung regelmäßig, z.B. monatlich, eine gleichbleibenden Betrag an ein Autohaus oder eine mit einem Autohersteller verbundene Bank. Daraus muß die Bank die Schlußfolgerung ziehen, daß ein Fahrzeug finanziert oder geleast wurde und daß dies regelmäßig nur zeitlich begrenzt erfolgt. Diese Zusatzinformation ist mit den Kundendaten zu speichern und dem Kunde das Angebot einer eventuellen kostengünstigen Umschuldung dieser Finanzierung, aber auch vor Ablauf von 2 Jahren und, wenn Überweisungen noch stattfinden, vor Ablauf von 3 Jahren wiederholt ein Fahrzeugangebot zuzuordnen. Beim ständigen Abgleich der vorhandenen Angebote der Bank mit den Suchkriterien der Kunden wird somit bei Vorhandensein eines solchen Angebotes in der Bank dies als Treffer auf dem Kontoauszug ausgegeben. werden.
Ähnliche Zusatzinformatione sind z.B. aus der ständigen Überweisung eines über einem Limit liegenden Betrages eines Gehaltskontos auf ein Sparkonto oder einem hohen Betrag eines Gehaltskontos zu ziehen. Die Zusatzinformation lautet hierbei, daß der Kunde versucht sein Geld zinsgünstig anzulegen bzw. verpaßt sein Geld zinsgünstig anzulegen. Deshalb ist ihm z.B. eine zinsgünstige Festanlage anzubieten oder eine teilweise Aktienanlage für lange Sicht zu empfehlen.

Alle diese dem Kunden zugeordneten Suchkriterien werden kundenbezogen gespeichert, ständig aktualisiert und vor jeder Kontoauszugserstellung mit der Startroutine aufgerufen und mit den Angeboten der Bank abgeglichen. Die ermittelten und zusätzlich zu den Kontobewegungen auf dem Kontoauszug ausgegeben Übereinstimmungen/Treffer werden ebenfalls gespeichert, um für spätere Angebote zur Verfügung zu stehen, um identische Wiederholungen auszuschließen und um für variierte/aktualisierte Wiederholungen zur Verfügung zu stehen.

## Patentansprüche

1. Kontoauszug dadurch gekennzeichnet, daß über notwendige Angaben hinaus unter Ausnutzung bestehender Identifikationskriterien eine oder mehrere für jeden Kunden spezifische auf seine Interessen, Bedürfnisse und finanziellen Verhältnisse abgestimmte Zusatzinformationen ohne Wiederholungen enthalten sind durch
- Zuordnung und Speicherung weiterer ständig aktualisierbarer kundenspezifischer Suchkriterien zu jeder Kontonummer und damit zu den bisher bestehenden allgemeine notwendigen Identifikationskriterien und Bildung einer um diese kundenspezifischen Suchkriterien erweiterten variablen Menge nunmehr aktualisierbarer kundenspezifischer Identifikationskriterien,
- bekannte rechentechnische Verknüpfungen aller dieser kundenspezifischer Identifikationskriterien als Suchkriterien mit zur Verfügung stehenden bzw. anzubietenden Zusatzinformationen als Angebotskriterien in einem bekannten rechentechnischen Suchregime mit Ausschluß der bisher bekannten Ausgabewiederholung für die Kontobewegungen/Buchungsvorgänge erweitert um den Ausschluß der Ausgabewiederholung der ausgegebenen Zusatzinformationen, zumindest in ihrer konkreten Art und Darstellung, und Ausgabe der Treffer bei rechentechnischer Übereinstimmung auf dem Kontoauszug und
- Erweiterung der schon vorhandenen softwareseitigen Startroutine um den Aufruf der Suchkriterien aus dem Speicher und den Abgleich der bisherigen bestehenden allgemein notwendigen Identifikationskriterien und Ausschluß der Ausgabewiederholung für die Kontobewegungen/Buchungsvorgänge um diese um kundenspezifische Suchkriterien erweiterte variable Menge nunmehr kundenspezifischer Identifikationskriterien als neues kundenspezifisches Suchregime vor Kontoauszugerstellung mit Ausschluß der Ausgabewiederholung und Trefferausgabe zusätzlich zu den bisherigen Buchungsvorgängen.

2. Kontoauszug nach Patentanspruch 1, dadurch gekennzeichnet, daß die für jeden Kunden spezifischen Zusatzinformationen von der den Kontoauszug ausstellenden Bank und/oder Dritten stammen.

3. Kontoauszug nach Patentanspruch 1 und 2, dadurch gekennzeichnet, daß vor Ausdruck der Zusatzinformationen zum Erreichen der Kundenspezifik der Zusatzinformationen ein Abgleich bzw. eine Kontrolle der Sinnfälligkeit der in der Bank vorhandenen Kundendaten mit den Aussagen der möglichen Zusatzinformationen und eine Kontrolle der Wiederholung und Ergänzung der Zusatzinformation geschaltet ist.

4. Kontoauszug nach ein oder mehreren der vorgenannten Patentansprüche, dadurch gekennzeichnet, daß die den Kontoauszug erstellende Bank vor der Weitergabe der Zusatzinformationen Dritter eine Prüfung auf Seriosität dieser Zusatzinformationen und/oder dieser Dritten geschaltet hat.

5. Kontoauszug nach ein oder mehreren der vorgenannten Patentansprüche, dadurch gekennzeichnet, daß die Möglichkeit der Einspielung von Zusatzinformationen auf Kontoauszüge anderer Bankkunden den Bankkunden als zusätzliches Marketinginstrument eines Betriebskontos für die Darbietung der Waren und Dienstleistungen des jeweiligen Inhabers des Betriebskontos zur Verfügung gestellt wird.
